# DEMANDE DE BREVET EUROPEEN

(11) **EP 4 616 823 A1**
(43) Date de publication de la demande: **17.09.2025**
(21) Numéro de dépôt: 25162869.9
(22) Date de dépôt: 11.03.2025
(51) Int. Cl.: A61C 1/07, A61C 8/02, A61C 8/00, A61C 9/00, A61C 17/18, A61C 17/20, A46B 15/00

(54) **DISPOSITIF DE BIOSTIMULATION OSSEUSE ADAPTÉ POUR LA CAVITÉ BUCCALE**

(30) Priorité: 11.03.2024 FR 2402415
(71) Demandeur: Soulier, Thierry, 26150 Die (FR)
(72) Inventeur: SOULIER, Thierry, 26150 Die (FR); GUERIN, Julien, 07700 Bourg-Saint-Andeol (FR); SOULIER, Eve, 26150 Die (FR)
(74) Mandataire: Novaimo

(57) **Abrégé**

Dispositif de biostimulation osseuse (3) adapté pour la cavité buccale, comprenant :
- un bras (4) pourvu d'une interface de fixation, notamment une ouverture (13), apte à coopérer avec un générateur de vibrations (2) tel qu'un manche de brosse à dents électrique, et
- une tête (5) de biostimulation osseuse fixée à une extrémité du bras, la tête comprenant un embout (6) en matériau souple destiné à être appuyée contre une structure osseuse maxillaire, notamment une crête osseuse (22), pour transmettre des vibrations à la structure osseuse maxillaire pour stimuler une croissance osseuse.

## Description

### Domaine technique de l'invention

L'invention concerne le domaine de l'implantologie dentaire, et notamment le domaine de la régénération osseuse préalable à la pose d'un implant dentaire. L'invention concerne en particulier un dispositif de biostimulation mécanique osseuse adapté pour la cavité buccale et un procédé de fabrication d'un tel dispositif. L'invention porte enfin sur un appareil de biostimulation osseuse comprenant un tel dispositif.

### Etat de la technique antérieure

La pose d'un implant dentaire est une technique couramment pratiquée pour remplacer une dent trop abimée pour être réparée. Pour poser un implant dentaire, on extrait complètement une dent d'une structure osseuse maxillaire, puis on fixe, après cicatrisation, l'implant dans cette structure. La structure osseuse maxillaire doit être suffisamment dense en hauteur et en largeur de la crête maxillaire pour que l'implant dentaire soit fermement ancré. Dans certains cas, il n'est pas possible de procéder directement au placement d'un implant dentaire en raison d'une insuffisance osseuse. Une greffe osseuse doit alors être réalisée préalablement à la pose de l'implant. Une greffe osseuse est un traitement particulière lourd et traumatisant.

Pour éviter le recours à une greffe osseuse, on connaît l'utilisation d'implants très courts et/ou très étroits. Des avancées technologiques récentes ont permis la conception d'implants de petites dimensions relativement fiables et solides. Le développement d'implants dentaires aux dimensions réduites ouvre de nouvelles perspectives, moins invasives et moins onéreuses, aux patients dont les mâchoires sont très résorbées ou atrophiées. Cette innovation n'est cependant pas applicable dans tous les cas, car il doit y avoir une certaine cohérence entre la taille de la dent remplacée et la surface de contact entre l'os et l'implant.

On connaît également, l'utilisation d'implants zygomatiques qui sont des implants plus longs que les implants dentaires traditionnels afin de pouvoir se fixer à distance des dents manquantes, au niveau des os zygomatiques. Cette technique demeure néanmoins très invasive et n'est pas applicable à toutes les situations.

Pour éviter une greffe osseuse, on connaît également l'utilisation de bridge dentaire. Un bridge dentaire est une prothèse dentaire qui est fixée sur les dents voisines de la dent à remplacer. Une telle technique est également assez complexe et requiert potentiellement de dégrader des dents saines pour fixer le bridge dentaire. De plus cette solution a une durée de vie moindre par rapport au concept implantaire.

### Présentation de l'invention

Le but de l'invention est de fournir un dispositif et un procédé d'utilisation d'un tel dispositif remédiant aux inconvénients ci-dessus et améliorant les procédés connus de l'art antérieur.

Plus précisément, un premier objet de l'invention est un dispositif de biostimulation osseuse, simple à fabriquer, simple à utiliser, et permettant de consolider une structure osseuse maxillaire afin d'y fixer un implant, ce qui permettrait d'éviter une greffe osseuse.

### Résumé de l'invention

L'invention se rapporte à un dispositif de biostimulation osseuse adapté pour la cavité buccale, comprenant :
- un bras pourvu d'une interface de fixation, notamment une ouverture, apte à coopérer avec un générateur de vibrations tel qu'un manche de brosse à dents électrique, et
- une tête de biostimulation osseuse fixée à une extrémité du bras, la tête comprenant un embout en matériau souple destiné à être appuyée contre une structure osseuse maxillaire, notamment une crête osseuse, pour transmettre des vibrations à la structure osseuse maxillaire pour stimuler une croissance osseuse.

Le générateur de vibrations peut être configuré pour faire vibrer la tête à une fréquence comprise entre 15 000 à 62 000 mouvements par minute.

Ledit embout peut être constitué d'un matériau adapté pour une prise d'empreinte maxillaire, notamment ledit embout peut être constitué d'un silicone par addition adapté pour une prise d'empreinte maxillaire.

Ledit embout peut être obtenu par moulage et configuré pour être appuyé sur une crête osseuse dégagée par l'extraction d'une dent.

Ledit embout peut comprendre :
- une première surface destinée à entrer en contact avec une gencive recouvrant la crête osseuse, la première surface comprenant une première portion s'étendant du côté lingual et une deuxième portion s'étendant du côté vestibulaire,
- une deuxième surface destinée à entrer en contact avec une première dent adjacente à ladite crête osseuse, et
- une troisième surface destinée à entrer en contact avec une deuxième dent adjacente à ladite crête osseuse, la première dent et la deuxième dent étant positionnée de part et d'autre de ladite crête osseuse.

Ladite tête peut être fixée à l'extrémité du bras selon une liaison pivot.

Ladite tête peut comprendre un support pourvu d'une terminaison noyée dans ledit embout.

L'invention se rapporte également à un appareil de biostimulation osseuse adapté pour la cavité buccale, comprenant un générateur de vibrations, notamment un manche de brosse à dents électrique, et un dispositif de biostimulation osseuse tel que défini précédemment, le dispositif de biostimulation osseuse étant fixé de manière amovible au générateur de vibrations de sorte à transmettre des vibrations à la tête du dispositif de biostimulation osseuse.

L'invention se rapporte également à un procédé de fabrication d'un dispositif de biostimulation osseuse tel que défini précédemment, le procédé comprenant une étape de fabrication dudit embout par prise d'empreinte maxillaire.

Le procédé de fabrication peut comprendre :
- une étape de réalisation d'un moulage d'au moins une partie d'une mâchoire avec au moins une dent manquante, puis
- une étape de fabrication dudit embout, cette étape de fabrication comprenant :
- le dépôt d'une masse fluide d'un matériau adapté pour une prise d'empreinte maxillaire sur ledit moulage, puis
- l'insertion de la terminaison du support dans la masse fluide, puis
- le durcissement de la masse fluide.

### Présentation des figures

Ces objets, caractéristiques et avantages de la présente invention seront exposés en détail dans la description suivante de divers modes de réalisation décrits à titre non-limitatif en relation avec les figures jointes parmi lesquelles :
La figure 1 est une vue schématique d'un appareil de biostimulation osseuse selon un mode de réalisation de l'invention.
La figure 2 est une vue en perspective d'une partie d'un dispositif de biostimulation osseuse selon un premier mode de réalisation de l'invention, cette partie comprenant un bras et un support.
La figure 3 est une vue en coupe de la partie du dispositif de biostimulation osseuse de la figure 2.
La figure 4 est une vue schématique et en perspective d'une partie d'une mâchoire dans laquelle une dent a été arrachée, une crête osseuse apparaissant en lieu et place de la dent arrachée.
La figure 5 est une vue schématique et en perspective de la partie de la mâchoire de la figure 4, un embout d'un dispositif de biostimulation osseuse recouvrant la crête osseuse.
La figure 6 est une vue schématique et en perspective dudit embout visible sur la figure 5.
La figure 7 est une vue en perspective d'une partie d'un dispositif de biostimulation osseuse selon un deuxième mode de réalisation de l'invention.
La figure 8 est une vue en coupe de la partie du dispositif de biostimulation osseuse de la figure 7.
La figure 9 est une vue en coupe d'une partie d'un dispositif de biostimulation osseuse selon un troisième mode de réalisation de l'invention.

### Description détaillée

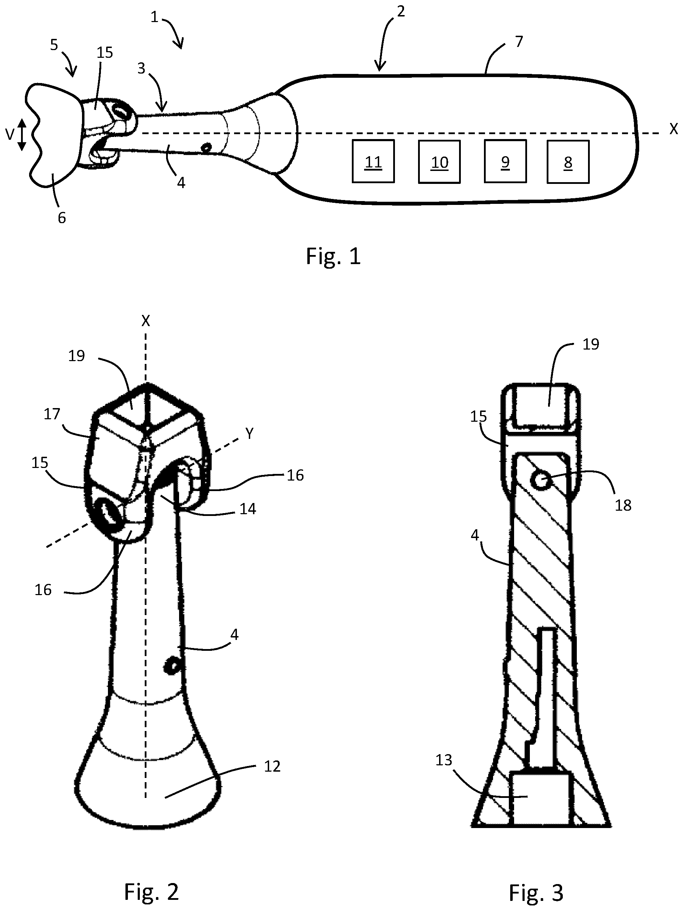

La figure 1 illustre schématiquement un appareil de biostimulation osseuse 1 selon un mode de réalisation de l'invention. L'appareil de biostimulation osseuse 1 comprend un générateur de vibrations 2 et un dispositif de biostimulation osseuse 3 coopérant avec le générateur de vibrations 2. Le dispositif de biostimulation osseuse 3 comprend un bras 4 fixé au générateur de vibrations 2, et une tête 5 de biostimulation osseuse fixée à une extrémité du bras 4. La tête 5 comprend un embout 6 en matériau souple destiné à être appuyé contre une structure osseuse maxillaire pour transmettre des vibrations à la structure osseuse maxillaire, pour stimuler la croissance osseuse de la structure osseuse maxillaire.

L'appareil de biostimulation osseuse 1 est adapté pour traiter la cavité buccale. En particulier, la tête 5 de biostimulation osseuse est adaptée pour être insérée sans danger dans la bouche d'un patient. La tête 5 comprend notamment des matériaux et des formes compatibles avec un contact direct contre des tissus de la cavité buccale tels que la gencive. Le générateur de vibrations 2 est adapté pour générer des vibrations dont la fréquence et l'amplitude sont compatibles avec une stimulation osseuse.

Le générateur de vibrations 2 comprend un manche 7, destiné à être saisi à une main, par exemple de forme grossièrement cylindrique, et s'étendant parallèlement à un axe longitudinal X. Avantageusement, le générateur de vibrations 2 est un manche de brosse à dents électrique. Un manche de brosse à dents électrique est facile à se procurer, facile à utiliser, et adapté à une utilisation dans la cavité buccale. Un manche de brosse à dents est généralement destiné à coopérer avec une brossette amovible pour brosser les dents. L'invention vise donc à remplacer la brossette amovible par un dispositif de biostimulation osseuse.

Le manche de brosse à dents électrique comprend notamment un dispositif de stockage d'énergie 8, notamment une batterie électrochimique, un moteur électrique 9 alimenté en énergie électrique par le dispositif de stockage d'énergie 8, et un élément vibrant 10 entraîné en vibration par le moteur électrique 9 via un mécanisme de transmission 11. L'élément vibrant 10 comprend une partie saillante vers l'extérieur du manche 7, par exemple sous la forme d'une lame vibrante, coopérant avec le dispositif de biostimulation osseuse 3 pour transmettre des vibrations au dispositif de biostimulation osseuse 3. La lame vibrante peut par exemple être saillante sur une hauteur de 2 à 3 cm selon l'axe longitudinal X. Le manche de brosse à dents électrique peut notamment être un appareil conforme à la norme ISO 20127:2020. Le manche de brosse à dents électrique peut, par exemple, être un appareil de type « Philips Sonicare » (marque déposée), ou encore un appareil de type « Oral-B » (marque déposée).

Le générateur de vibrations 2 est avantageusement configuré pour faire vibrer la tête 5 à une fréquence comprise entre 15 000 à 62 000 mouvements par minute, par exemple entre 30 000 et 35 000 mouvements par minute. En variante, des fréquences plus élevées pourraient être envisagées. Le générateur de vibrations 2 pourrait même être configuré pour faire vibrer la tête 5 à une fréquence ultrasonore, c'est-à-dire une fréquence comprise entre 16kHz et 10MHz.

Le générateur de vibrations 2 peut notamment être configuré pour transmettre à la tête 5 des vibrations orientées perpendiculairement à l'axe longitudinal X. L'orientation des vibrations de la tête 5 est illustrée schématique par une double flèche V sur la figure 1. En variante, d'autres orientations des vibrations pourraient être envisagées.

Le bras 4 est fixé de manière amovible au générateur de vibrations 2, ce qui permet d'envisager d'autres utilisations du générateur de vibrations 2. En particulier, lorsque le générateur de vibrations 2 est un manche de brosse à dents électrique, le dispositif de biostimulation osseuse 3 peut être interchangé avec une brossette destinée à brosser les dents. Ainsi, l'appareil de biostimulation osseuse 1 peut facilement être utilisé en complément d'un brossage des dents.

En référence aux figures 2 et 3, le bras 4 comprend une forme grossièrement cylindrique dont l'axe de révolution correspond à l'axe longitudinal X. Il peut notamment comprendre une forme identique au corps d'une brossette pour brosse à dents électrique. La longueur du bras 4 selon l'axe longitudinal X peut être compris entre 30mm et 80mm, par exemple de l'ordre de 50mm environ. Le bras 4 comprend une extrémité proximale 12 pourvue d'une ouverture 13 borgne à l'intérieur de laquelle l'élément vibrant 10 du générateur de vibrations 2 est inséré. L'ouverture 13 s'étend parallèlement à l'axe longitudinal X. L'ouverture 13 présente typiquement une géométrie spécifiée par un fabricant de générateur de vibrations 2, de manière à transmettre efficacement les vibrations et à assurer une fixation amovible du bras 4 au générateur de vibrations 2. L'ouverture 13 constitue ainsi une interface de fixation du dispositif de biostimulation osseuse 3 avec le générateur de vibrations 2. L'ouverture 13 peut notamment comprendre une face interne plane destinée à prendre appui sur une lame d'un manche de brosse à dents électriques. L'ouverture 13 peut comprendre une entrée circulaire dont le diamètre est de 8mm environ. L'ouverture 13 peut comprendre une profondeur comprise entre 20mm et 30mm, de préférence une profondeur d'environ 25mm selon l'axe longitudinal X. L'extrémité proximale 12 peut être évasée pour épouser la forme du manche 7 du générateur de vibrations 2. L'extrémité proximale 12 peut avoir une section circulaire dont le diamètre est, par exemple, de 18mm environ. Le bras 4 peut être un élément monolithique constitué de plastique. Le bras 4 peut, par exemple, être obtenu par injection plastique dans un moule ou par synthèse additive.

La tête 5 est fixée à une extrémité distale 14 du bras 4. La tête 5 comprend l'embout 6 en matériau souple mentionné précédemment, et un support 15 sur lequel l'embout 6 est fixé. Le support 15 peut également être un élément monolithique constitué de plastique. Le support 15 peut être, par exemple, obtenu par injection plastique dans un moule ou par synthèse additive. Le support 15 et l'extrémité distale 14 du bras 4 étant destinés à être introduits dans la cavité buccale, ils comprennent de préférence des contours arrondis, dépourvus d'arêtes vives, afin d'éviter toute blessure des tissus de la cavité buccale.

Selon le mode de réalisation illustré sur les figures 1 à 3, la tête 5 est fixée à l'extrémité du bras 4 selon une liaison pivot autour d'un axe transversal Y, perpendiculaire à l'axe longitudinal X. En particulier, selon le mode de réalisation présenté, le support 15 comprend deux pattes de liaison 16 s'étendant de part et d'autre de l'extrémité distale 14 du bras 4. Chaque patte de liaison 16 et l'extrémité distale 14 comprennent un trou dans lequel un axe 18 s'étend. L'axe 18 peut notamment être formé par une vis. La vis peut être maintenue au support 15 au moyen d'un écrou. En variante, la liaison pivot entre le bras 4 et le support 15 pourrait être réalisée différemment. Par exemple, les deux pattes de liaison 16 pourraient être solidaires du bras 4 au lieu d'être solidaires du support 15. Un avantage à intégrer un moyen de liaison pivot entre le support 15 et le bras 4 est de faciliter l'utilisation de l'appareil de biostimulation osseuse 1 : le bras 4 peut facilement être inséré dans la cavité buccale et l'embout 6 peut facilement atteindre des zones difficiles d'accès de la cavité buccale. L'utilisation de l'appareil de biostimulation osseuse 1 est ainsi plus confortable. Avantageusement, la liaison pivot entre le support 15 et le bras 4 est configurée de sorte à permettre la transmission des vibrations produites par le générateur de vibrations 2 jusqu'à l'embout 6. En particulier, l'axe transversal Y peut avantageusement être orienté perpendiculairement à la direction des vibrations.

L'embout 6 est en matériau souple de manière à être compatible avec un contact direct contre un tissu de la cavité buccale, notamment la gencive. L'embout 6 est néanmoins suffisamment rigide pour supporter les vibrations transmises par le générateur de vibrations 2 sans se détériorer, ainsi que pour transmettre les vibrations à la structure osseuse maxillaire. L'embout 6 n'est pas une brossette pour brosser les dents. Notamment, l'embout 6 ne comprend aucun poil ou picot destiné à entrer en contact avec une dent. En effet, les poils d'une brossette sont destinés à brosser l'émail d'une dent et ne permettent pas de transmettre des vibrations à la structure osseuse maxillaire de manière à stimuler sa croissance osseuse.

L'embout 6 peut comprendre une dureté comprise entre 35 Shore A et 90 Shore A, de préférence entre 50 et 70 Shore A. De préférence, l'embout 6 comprend du silicone. En particulier, l'embout 6 peut être constitué d'un matériau adapté pour réaliser une empreinte maxillaire. Un tel matériau est généralement utilisé dans un cabinet dentaire en combinaison avec un porte empreinte pour réaliser une empreinte maxillaire. Un tel matériau est donc déjà disponible dans tous les cabinets dentaires ce qui facilite encore la mise en œuvre de l'invention.

L'embout 6 peut notamment être constitué d'un silicone par addition adapté pour une prise d'empreinte maxillaire. Un tel matériau est obtenu en mélangeant des silicones de base avec des catalyseurs et/ou des additifs et/ou des solvants ou diluants. Les silicones de base (ou polymères de silicone) sont les principaux composants du silicone par addition. Ils peuvent être des polymères organosiliciés, constitués d'unités récurrentes de silicium et d'oxygène, auxquelles sont liés des groupes organiques, tels que les groupes méthyle (-CH3) ou phényle (-C6H5). Les catalyseurs (ou agents de réticulation) sont des agents qui déclenchent la réaction de réticulation ou de polymérisation, au cours de laquelle les polymères de silicone se lient entre eux pour former une structure tridimensionnelle solide. Les catalyseurs peuvent être de différentes natures, mais ils sont généralement des composés métalliques, tels que des complexes de platine. Des additifs peuvent être incorporés pour modifier les propriétés du silicone fini en fonction des besoins spécifiques de l'application. Par exemple, des colorants peuvent être ajoutés pour donner au silicone une couleur spécifique ; des agents de remplissage peuvent être utilisés pour renforcer le matériau ; des agents de modification de la rhéologie peuvent être ajoutés pour ajuster la viscosité du silicone lors de l'application ; et des agents anti-moussants peuvent être incorporés pour réduire la formation de bulles d'air pendant le mélange. Dans certains cas, des solvants ou des diluants peuvent être ajoutés pour ajuster la viscosité du mélange de silicone ou faciliter son application. Ces solvants ou diluants s'évaporent généralement pendant le processus de durcissement du silicone.

De manière alternative ou en complément du silicone, l'embout 6 pourrait comprendre des polysulfures, et/ou des polyéthers, et/ou tout autre matériau équivalent à du silicone. Les matériaux à base de polysulfure offrent une bonne précision et une bonne résistance à la déchirure. Les polyéthers sont connus pour leur excellente précision et leur stabilité dimensionnelle, mais ils peuvent être moins confortables pour le patient en raison de leur temps de prise plus long. D'une manière générale, on évitera de choisir un matériau cassant ou susceptible de se casser sous l'effet des vibrations, comme par exemple des alginates.

Avantageusement l'embout 6 est spécialement moulé selon l'anatomie de la structure osseuse à renforcer. Chaque embout 6 possède donc une forme géométrique unique, obtenue grâce à un procédé de moulage. Comme l'embout 6 est moulé selon l'anatomie de la structure osseuse maxillaire à renforcer, il comprend une grande surface d'appui sur cette structure osseuse. Les efforts liés à la mise en vibration de la tête 5 sont donc répartis sur une surface importante, ce qui évite de blesser les tissus recouvrant la structure osseuse et/ou de créer des douleurs. De plus, le moulage de l'embout 6 permet de stabiliser la position de l'embout 6 dans la cavité buccale et facilitent l'utilisation du dispositif.

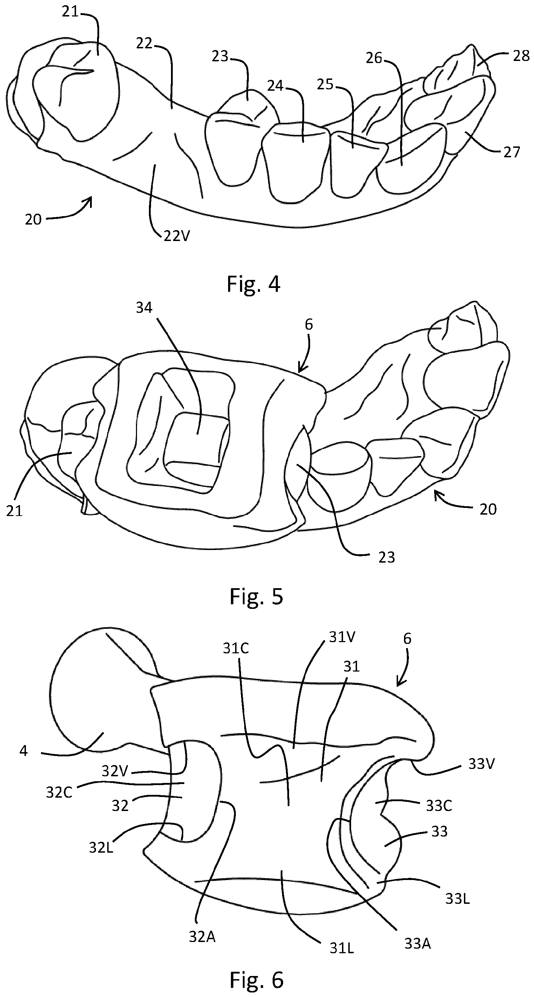

La figure 4 illustre une partie d'une mâchoire 20 comprenant sept dents référencées respectivement 21, 23, 24, 25, 26, 27 et 28. Sur cette mâchoire 20, une dent, initialement positionnée entre la dent 21 et la dent 23, a été extraite. L'alvéole dentaire dans laquelle la dent extraite était logée est recouverte par de la gencive. Le comblement de l'alvéole dentaire par de la gencive est un processus naturel intervenant en quelques semaines à la suite de l'extraction d'une dent. La gencive recouvre donc une crête osseuse 22 dans laquelle un implant doit être fixé. La crête osseuse 22 comprend une face vestibulaire 22V (visible sur la figure 4) faisant face à une joue ou une lèvre, et une face linguale (invisible sur la figure 4) faisant face à la langue. La dent 21 et la dent 23 sont positionnées de part et d'autre de la crête osseuse 22.

L'embout 6 représenté sur la figure 5 est en appui sur la crête osseuse 22 et occupe ainsi une position adaptée pour transmettre des vibrations à la crête osseuse 22. En remarque, lorsque l'embout 6 est dit « en appui contre la crête osseuse 22 », on comprend qu'il est en contact direct avec la gencive alvéolaire qui recouvre la crête osseuse 22 et non en contact direct avec un os de la mâchoire. L'embout 6, lequel est illustré indépendamment sur la figure 6, comprend différentes surfaces 31, 32, 33 destinées à entrer en contact avec différentes parties de la cavité buccale. La première surface 31 est destinée à entrer en contact avec la gencive recouvrant la crête osseuse 22 dégagée par l'extraction d'une dent. En particulier, la première surface comprend une première portion 31L s'étendant du côté lingual (en contact avec la face linguale) et une deuxième portion 31V s'étendant du côté vestibulaire (en contact avec la face vestibulaire 22V). Entre la première portion 31L et la deuxième portion 31V, on peut éventuellement distinguer une troisième portion 31C, centrale, destiné à entrer en contact avec le sommet de la gencive recouvrant crête osseuse 22. Le sommet de la crête osseuse peut être plus ou moins aplati en fonction de l'anatomie de la mâchoire considérée. La deuxième surface 32 est destinée à entrer en contact avec une première dent adjacente à la crête osseuse 22, en l'espèce la dent 21. La troisième surface 33 est destinée à entrer en contact avec une deuxième dent adjacente à la crête osseuse 22, en l'espèce la dent 23. Les dents 21 et 23 sont ainsi au moins partiellement recouvertes par l'embout 6. Plus précisément encore, la deuxième surface 32 et la troisième surface 33 comprennent respectivement une première portion 32L, 33L s'étendant du côté lingual des dents 21 et 23, et une deuxième portion 32V, 33V s'étendant du côté vestibulaire des dents 21 et 23. Entre la première portion 32L et la deuxième portion 32V, on peut éventuellement distinguer une troisième portion 32C, centrale, destinée à entrer en contact avec une face supérieure de la dent 21. De même, entre la première portion 33L et la deuxième portion 33V, on peut éventuellement distinguer une troisième portion 33C, centrale, destiné à entrer en contact avec une face supérieure de la dent 23. La deuxième surface 32 et la troisième surface 33 peuvent également comprendre respectivement des quatrièmes portions 32A, 33A en contact avec les faces latérales des dents 21 et 23 découvertes par l'extraction de la dent. La forme de l'embout 6 dépend donc non seulement de la forme de la crête osseuse 22 mais également de la forme des dents adjacentes à la crête osseuse 22. Dans l'hypothèse où la crête osseuse ne comprendrait qu'une seule dent adjacente, la forme de l'embout serait adaptée en conséquence.

La liaison mécanique entre le support 15 et l'embout 6 est également très simple et fiable. Comme cela est illustrée sur la figure 2, le support 15 comprend avantageusement une terminaison 17 pourvue d'une cavité 19 apte à recevoir l'embout 6. En l'espèce, la cavité 19 présente une forme profilée de section carrée. En variante, d'autres formes pourraient être envisagée. La terminaison 17 du support est noyée dans l'embout 6. L'embout 6 comprend ainsi une forme complémentaire à celle de terminaison 17 du support. En l'espèce, l'embout 6 comprend une portion prismatique 34 (visible sur la figure 5) de forme complémentaire à la forme de la cavité 19, et apte à prendre place dans la cavité 19. La surface de contact relativement importante entre l'embout 6 et le support 15 permet de retenir efficacement l'embout sur le support. L'embout 6 peut également être facilement retiré du support.

Pour fabriquer le dispositif de biostimulation osseuse, on peut procéder de la manière suivante. Tout d'abord on réalise un moulage, par exemple en plâtre, d'une partie d'une mâchoire dans laquelle une dent a été retirée. Le moulage peut, par exemple, correspondre à la partie de mâchoire 20 visible sur les figures 4 et 5. Ensuite, on prépare une masse de silicone par addition, en mélangeant un silicone de base avec un catalyseur. On obtient ainsi une patte fluide, facilement malléable, qui est destinée à durcir en quelques minutes à l'air ambiant. On positionne cette masse à l'état fluide sur la crête osseuse 22 de manière à la recouvrir complètement. Avantageusement, cette masse recouvre également au moins partiellement les dents 21 et 23. Ensuite, on appuie sur la masse de sorte qu'elle épouse la forme de la crête osseuse 22 et d'une partie des dents 21 et 23. On s'assure notamment qu'aucune bulle d'air de taille significative n'est formée entre la masse de silicone et la crête osseuse 22. Ensuite, on insère la terminaison 17 d'un support 15 dans la masse de silicone non durci. On veille notamment à enfoncer suffisamment le support 15 dans la masse de silicone pour assurer une bonne cohésion entre l'embout 6 et le support 15. La terminaison 17 est ainsi noyée dans le silicone. En particulier, le silicone pénètre complètement dans la cavité 19 du support. On veille néanmoins à ne pas noyer l'articulation en rotation entre le support 15 et le bras 4 dans le silicone, sans quoi la liaison pivot entre ces deux éléments pourrait être bloquée. Ensuite, on laisse durcir le silicone pendant quelques minutes. On peut alors retirer l'embout 6 du moulage. Le dispositif de biostimulation osseuse 3 est ensuite prêt à être connecté à un générateur de vibrations 2 et être utilisé pour traiter un patient. En noyant complètement la terminaison 17 dans l'embout 6, on évite un contact direct entre la terminaison et des tissus biologique, ce qui pourrait être douloureux.

En variante, l'embout 6 pourrait être fabriqué en moulant directement la crête osseuse dans la bouche d'un patient. Toutefois, un tel procédé de fabrication peut être relativement inconfortable car le patient doit ouvrir grand la bouche pour recevoir non seulement la masse de silicone fluide, mais également la terminaison 17 noyée dans la masse de silicone. Selon une variante de réalisation, le procédé de fabrication de l'embout 6 pourrait comprendre une étape de scan tridimensionnel de la cavité buccale au moyen d'un scanner buccal.

L'appareil de biostimulation osseuse 1 ainsi obtenu est destiné à être utilisé de manière répétée, sur une période donnée, pour stimuler la croissance osseuse de la structure osseuse maxillaire inférieure et/ou de la structure osseuse supérieure. En remarque, par « structure osseuse maxillaire », on comprend aussi bien l'os de mâchoire inférieure que l'os de la mâchoire supérieure. Par « croissance osseuse », on comprend une augmentation de la dimension de l'os dans un sens vertical (c'est-à-dire dans le sens de l'axe de l'implant qui sera posé en bouche), et/ou dans un sens horizontal (c'est-à-dire dans une direction globalement perpendiculaire à l'axe de l'implant qui sera posé en bouche).

L'appareil de biostimulation osseuse 1 peut donc être utilisé dans un procédé de restauration dentaire, préalablement à la pose d'un implant, pour renforcer structure osseuse maxillaire et lui conférer la solidité nécessaire à la pose d'un implant. Un protocole thérapeutique peut ainsi prévoir, par exemple, l'utilisation de l'appareil de biostimulation osseuse 1 à raison de une ou deux fois par jour, pendant une à deux minutes, sur une période de plusieurs semaines, voire plusieurs mois. L'appareil de biostimulation osseuse 1 peut être utilisé, par exemple, directement après un brossage des dents.

Pour utiliser l'appareil de biostimulation osseuse 1, il suffit de positionner l'embout sur la crête osseuse 22 et de mettre en marche le générateur de vibrations. Le bon positionnement de l'embout 6 est facile à trouver en raison de sa forme moulée selon l'anatomie de la crête osseuse à traiter. Lorsque le générateur de vibrations produit des vibrations, l'utilisateur tient le manche 7 et exerce un appui sur la crête osseuse pour bien transmettre ces vibrations à la crête osseuse. Avantageusement l'articulation en rotation entre le bras 4 et la tête 5 offre un confort supplémentaire à l'utilisateur lors de l'utilisation de l'appareil de biostimulation osseuse puisqu'il peut varier la position de sa main et peut refermer sa bouche sur le bras 4.

Au terme d'un tel protocole thérapeutique, on observe un renforcement de la structure osseuse maxillaire. La structure osseuse maxillaire peut alors être suffisamment robuste pour accueillir un implant dentaire. Une greffe osseuse ou une opération chirurgicale complexe peut ainsi être évitée. L'embout 6 peut être adapté pour traiter toute crête osseuse rendue apparente à la suite de l'extraction de n'importe quelle dent d'une dentition.

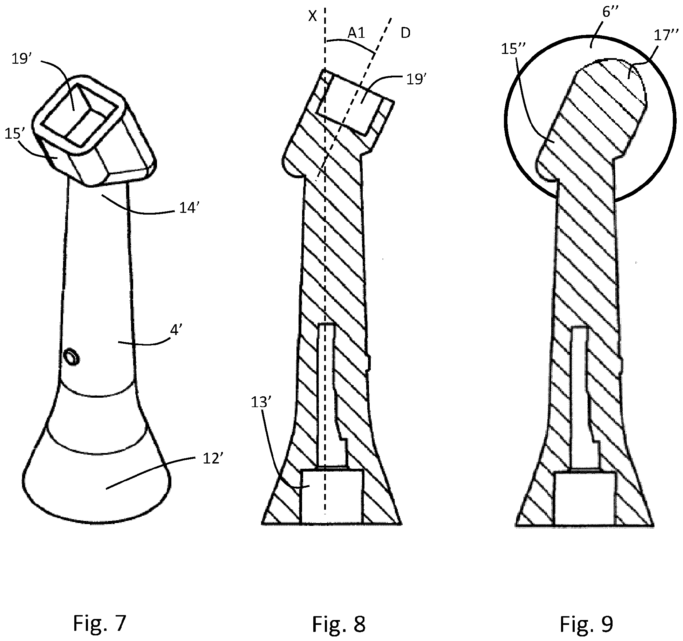

Les figures 7 et 8 illustrent à présent une partie d'un dispositif de biostimulation osseuse selon un deuxième mode de réalisation de l'invention. Les mêmes références que pour le premier mode de réalisation, mais avec le suffixe « ' », sont utilisées pour décrire les éléments du dispositif de biostimulation osseuse du deuxième mode de réalisation de l'invention qui présentent une fonction identique ou analogue. Selon ce mode de réalisation, la tête 5' et le bras 4' ne sont pas articulés en rotation mais fixés rigidement l'un à l'autre. En particulier, le support 15' et le bras 4' forment un ensemble monobloc, par exemple en plastique, et de préférence obtenu par injection plastique ou par synthèse additive. La tête 5' s'étend dans une direction D formant un angle A1 fixe avec l'axe longitudinal X. L'angle A1 peut, par exemple être compris entre 15° et 45° inclus, de préférence entre 20° et 30° inclus. Cette variante de réalisation est plus simple à fabriquer puisqu'on s'affranchit de la liaison pivot entre la tête 5' et le bras 4'. Toutefois, le dispositif de biostimulation osseuse 3' peut être moins commode à utiliser pour solliciter une structure osseuse maxillaire dans une zone reculée de la cavité buccale.

Selon encore une autre variante de réalisation de l'invention, l'embout 6 pourrait ne pas être moulé contre une partie de la cavité buccale, notamment contre une crête osseuse. L'embout pourrait comprendre une forme standard, par exemple une forme de demi-sphère. Un tel embout universel pourrait également être appliqué contre une crête osseuse pour réaliser une biostimulation. Il pourrait également être appliqué contre la gencive à la base d'une dent non arrachée, pour réaliser un renforcement préventif de la structure osseuse maxillaire. Une forme sphérique de l'embout 6 est avantageuse car elle permet de solliciter une grande variété de zones de la cavité buccale, sans risquer de créer un point de pression douloureux. La forme sphérique confère également une certaine liberté à l'orientation du manche du générateur de vibrations. Le dispositif de stimulation osseuse peut donc être manipulé très simplement, sans avoir à lever le coude, ce qui réduit la fatigue du bras de l'utilisateur. En outre, l'embout 6 comprend avantageusement une surface lisse. Une surface lisse permet un contact doux avec les tissus buccaux et évite l'accumulation de particules à la surface de l'embout 6, ce qui améliore l'hygiène.

Selon encore une autre variante de réalisation de l'invention, l'embout pourrait comprendre une forme personnalisée, adaptée à la forme anatomique de la zone à renforcer, mais comprenant néanmoins certaines adaptations de forme comparativement à la forme d'un embout qui serait obtenu par moulage. Ces adaptations pourraient être destinées à stimuler la structure osseuse maxillaire dans des zones très précises, afin de la renforcer localement selon un schéma donné.

La figure 9 illustre une partie d'un dispositif de biostimulation osseuse selon un troisième mode de réalisation de l'invention. Les mêmes références que pour le premier mode de réalisation, mais avec le suffixe « " », sont utilisées pour décrire les éléments du dispositif de biostimulation osseuse du troisième mode de réalisation de l'invention qui présentent une fonction identique ou analogue. Le troisième mode de réalisation diffère du deuxième mode de de réalisation en ce que la terminaison 17" du support 15" ne comprend aucune cavité. En lieu et place de la cavité 19, 19' précédemment décrite, la terminaison 17" comprend une face convexe, notamment une face arrondie. De même que précédemment, la terminaison 17'" est complètement recouverte par un un embout 6" en matériau souple destiné à être appuyée contre une structure osseuse maxillaire. L'embout 6" peut comprendre une forme personnalisée, adaptée à la forme anatomique de la zone à renforcer, ou une forme universelle, notamment une forme sphérique, comme cela est représenté sur la figure 9. La terminaison 17" étant dépourvue de cavité, le support 15" est plus robuste et transmet plus efficacement les vibrations. De plus, le massage des gencives avec un tel dispositif de biostimulation osseuse s'avère, de manière surprenante, beaucoup plus agréable.

Finalement grâce à l'invention, on dispose d'un appareil de biostimulation osseuse très simple à fabriquer. En effet, l'invention propose de réutiliser un manche de brosse à dents électrique initialement destiné à brosser les dents. Il suffit d'adapter un dispositif de biostimulation osseuse sur le manche de brosse à dents électrique. Le dispositif de biostimulation osseuse comprend un nombre limité de composants parmi lesquels un unique composant, l'embout 6, est personnalisé selon l'anatomie de la cavité buccale à traiter. De surcroit, cet embout peut être fabriqué avec un matériau disponible dans tous les cabinets dentaires puisqu'il est initialement destiné à réaliser une empreinte dentaire. Le bras et le support du dispositif de biostimulation osseuse sont des composants très simples à fabriquer et peuvent être réutilisés pour traiter différents patients.

L'appareil de biostimulation osseuse est également simple à utiliser. L'appareil de biostimulation osseuse peut être utilisé soi-même, en tout lieu et à tout moment, notamment à domicile. L'appareil de biostimulation osseuse permet une régénération osseuse sans recourir à une greffe osseuse ou à un traitement chirurgical invasif. Alternativement, l'appareil de biostimulation peut aussi être utilisé préalablement à une greffe osseuse, de manière à rendre la greffe osseuse plus simple et moins traumatisante. En outre, il a été découvert que l'application régulière de vibrations favorise la réduction des germes pathogènes dans la cavité buccale. L'appareil de biostimulation permet donc également d'améliorer la santé de son utilisateur.

## Revendications

1. Dispositif de biostimulation osseuse (3) adapté pour la cavité buccale, comprenant :
- un bras (4) pourvu d'une interface de fixation, notamment une ouverture (13), apte à coopérer avec un générateur de vibrations (2) tel qu'un manche de brosse à dents électrique, et
- une tête (5) de biostimulation osseuse fixée à une extrémité du bras, la tête comprenant un embout (6) en matériau souple destiné à être appuyée contre une structure osseuse maxillaire, notamment une crête osseuse (22), pour transmettre des vibrations à la structure osseuse maxillaire pour stimuler une croissance osseuse.

2. Dispositif de biostimulation osseuse (3) selon la revendication précédente, **caractérisé en ce que** le générateur de vibrations (2) est configuré pour faire vibrer la tête (5) à une fréquence comprise entre 15 000 à 62 000 mouvements par minute.

3. Dispositif de biostimulation osseuse (3) selon l'une des revendications précédentes, **caractérisé en ce que** ledit embout (6) est constitué d'un matériau adapté pour une prise d'empreinte maxillaire, notamment **en ce que** ledit embout est constitué d'un silicone par addition adapté pour une prise d'empreinte maxillaire.

4. Dispositif de biostimulation osseuse (3) selon l'une des revendications précédentes, **caractérisé en ce que** ledit embout (6) est obtenu par moulage et configuré pour être appuyé sur une crête osseuse (22) dégagée par l'extraction d'une dent.

5. Dispositif de biostimulation osseuse (3) selon la revendication précédente, **caractérisé en ce que** ledit embout comprend :
- une première surface (31) destinée à entrer en contact avec une gencive recouvrant la crête osseuse (22), la première surface comprenant une première portion (31L) s'étendant du côté lingual et une deuxième portion (31V) s'étendant du côté vestibulaire,
- une deuxième surface (32) destinée à entrer en contact avec une première dent (21) adjacente à ladite crête osseuse, et
- une troisième surface (33) destinée à entrer en contact avec une deuxième dent (23) adjacente à ladite crête osseuse, la première dent et la deuxième dent étant positionnée de part et d'autre de ladite crête osseuse.

6. Dispositif de biostimulation osseuse (3) selon l'une des revendications précédentes, **caractérisé en ce que** ledit embout (6") comprend une forme sphérique et lisse.

7. Dispositif de biostimulation osseuse (3) selon l'une des revendications précédentes, **caractérisé en ce que** ladite tête (5) est fixée à l'extrémité du bras (4) selon une liaison pivot.

8. Dispositif de biostimulation osseuse (3) selon l'une des revendications précédentes, **caractérisé en ce que** ladite tête (5) comprend un support (15) pourvu d'une terminaison (17) noyée dans ledit embout (6).

9. Appareil de biostimulation osseuse (1) adapté pour la cavité buccale, **caractérisé en ce qu'**il comprend un générateur de vibrations (2), notamment un manche de brosse à dents électrique, et un dispositif de biostimulation osseuse (3) selon l'une des revendications précédentes, le dispositif de biostimulation osseuse étant fixé de manière amovible au générateur de vibrations de sorte à transmettre des vibrations à la tête (5) du dispositif de biostimulation osseuse.

10. Procédé de fabrication d'un dispositif de biostimulation osseuse (3) selon l'une des revendications 1 à 8, **caractérisé en ce qu'**il comprend une étape de fabrication dudit embout (6) par prise d'empreinte maxillaire.

11. Procédé de fabrication d'un dispositif de biostimulation osseuse (3) selon la revendication 4 et selon la revendication 8, **caractérisé en ce qu'**il comprend :
- une étape de réalisation d'un moulage d'au moins une partie d'une mâchoire avec au moins une dent manquante, puis
- une étape de fabrication dudit embout, cette étape de fabrication comprenant :
- le dépôt d'une masse fluide d'un matériau adapté pour une prise d'empreinte maxillaire sur ledit moulage, puis
- l'insertion de la terminaison (17) du support (15) dans la masse fluide, puis
- le durcissement de la masse fluide.
